# EUROPEAN PATENT SPECIFICATION

(11) **EP 3 145 620 B1**
(45) Date of publication and mention of the grant of the patent: **21.05.2025**
(21) Application number: 15726904.4
(22) Date of filing: 22.05.2015
(51) Int. Cl.: B01D 53/04

(54) **METHOD AND CARTRIDGE FOR CARBON DIOXIDE RECOVERY**
VERFAHREN UND KARTUSCHE ZUR KOHLENDIOXIDRÜCKGEWINNUNG
PROCEDE ET CARTOUCHE DE RECUPERATION DE DIOXYDE DE CARBONE

(30) Priority: 22.05.2014 GB 201409157
(43) Date of publication of application: 29.03.2017
(73) Proprietor: Krajete GmbH, 4061 Pasching (AT)
(72) Inventor: KRAJETE, Alexander, A-4020 Linz (AT)
(74) Representative: Graf von Stosch Patentanwaltsgesellschaft mbH
(86) International application number: PCT/EP2015/061460
(87) International publication number: WO 2015/177361

(56) References cited:
- US-A1- 2007 298 478
- US-A1- 2013 192 468
- US-A1- 2013 298 532
- US-A1- 2014 044 632
- RANJANI V. SIRIWARDANE ET AL: "Adsorption of CO 2 on Molecular Sieves and Activated Carbon", ENERGY & FUELS., vol. 15, no. 2, 1 March 2001 (2001-03-01), WASHINGTON, DC, US., pages 279 - 284, XP055520321, ISSN: 0887-0624, DOI: 10.1021/ef000241s
- S. JENORIS MUTHIYA ET AL: "CARBON CAPTURE AND STORAGE FROM AUTOMOBILE EXHAUST TO REDUCE CO 2 EMISSION", INTERNATIONAL JOURNAL OF INNOVATIVE RESEARCH IN SCIENCE, ENGINEERING AND TECHNOLOGY, vol. 3, 30 April 2014 (2014-04-30), pages 33 - 37, XP055697565, ISSN: 2347-6710

## Description

During the last years, global warming moved to the centre of attention. The increasing release of carbon dioxide is considered one of the major contributors to global warming. The origin of the problem of high carbon dioxide (CO₂) release is considered to be anthropogenic, i.e. lies in human activities, eventually resulting in > 30 billion tons of CO₂ emission per year. In particular, transportation is a significant contributor to human made CO₂ emissions.

Two approaches, namely carbon capture and storage (CCS) and carbon capture and utilization (CCU), aim at reducing the amount of carbon dioxide released into the atmosphere in order to slow down global warming. A third approach is decarbonization through hydrogen or electricity which replace hydrocarbons as a CO₂ source.

In carbon capture and storage (CCS), carbon dioxide is captured from large emission sources, such as fossil fuel power plants, and transported to a storage site so that it cannot enter the atmosphere anymore. A typical storage site is an underground geological formation. The aim of this approach is to prevent the release of large quantities of CO₂ from fossil fuel use in power generation and other industries into the atmosphere.

Carbon capture and utilization (CCU) leads to production of chemical products such as synthetic fuels including methane, gasoline, diesel fuel and jet fuel, and base chemicals. Such fuels are potentially carbon-neutral because they do not result in a net increase in atmospheric greenhouse gases.

However, at present both main approaches are not established as cost-effective standard measure for reducing the release of carbon dioxide into the atmosphere. Hence, there is still a need in the art for an efficient method for carbon capture and utilization (CCU) or storage (CCS).

US 2014/044632 A1 discloses an exhaust processing assembly for an exhaust generating device comprising one or more cartridges, each of the cartridges including a housing and a constituent, e.g. soda lime, housed in the housing and capable of at least partially removing carbon dioxide from the exhaust of the exhaust generating device.

US 2013/298532 Al describes a reversible solid adsorption method and system utilizing waste heat for on-board recovery and storage of carbon dioxide from motor vehicle internal combustion engine exhaust gases.

US 2013/192468 A1 concerns a gas purification system for liquefaction of dilute gas components.

US 2007/298478 Al describes a method to decrease emission of carbon dioxide from combustion of fossil fuels or other hydrocarbons and to enhance the efficiency of methane production from anaerobic biodigesters.

Siriwardane et al. (Energy and Fuels 2001, 15, 279-284) describes the adsorption of carbon dioxide on molecular sieves and activated carbon in large-industrial pressure swing adsorption (PSA) and temperature swing adsorption (TSA).

Jenoris Muthiya et al. (International Journal of Innovative Research in Science, Engineering and Technology 2014, 3(2), 33-37) describes carbon capture and storage from automobile exhaust to reduce carbon dioxide emission.

In order to overcome the above described need in the art, the present invention focuses on small emittents like vehicles for transportation as CO₂ sources for CO₂ capture and utilization and/or storage. In large scale applications, industrial attempts have failed to accommodate carbon capture and storage or utilization as a solution for carbon dioxide elimination or neutralization. This is partly due to the cost associated with industrial CO₂ capture and also due to law restrictions and limited acceptance of CCS.

Today's transportation industry, in particular the automotive sector, needs to reduce CO₂ emissions. This activity is motivated by legislation which imposes new laws on almost every year basis to control CO₂ emissions of cars and trucks. Common approaches involve technologies, such as the increase of engine efficiency, the decrease of automotive weight and alternative energy engines. The present invention is based on the combustion engine as the central technology for mobility while focusing on binding and recovering CO₂ from the released gas mixture. Full CO₂ binding may provide a "zero emission mobility" accomplished through a closed carbon cycle wherein CO₂ is bound, released and used in an industrial process or stored to be removed from the carbon cycle. Thereby, CO₂, mainly considered as waste, turns into feedstock or a valuable component for fuel. The method of the invention allows closing the carbon dioxide cycle for mobility and is independent of the fuel type which may be petrol, diesel, natural gas but also DME (dimethylether), methanol, ethanol and/or biofuels which upon combustion release CO₂ as product.

In particular carbon dioxide which is considered waste in other industries is a valuable starting substance for the present invention and therefore starting material or reactant for the method of the invention.

To overcome the above mentioned drawbacks in current carbon capture and utilization and/or storage, the invention provides a method for carbon capture and utilization (CCU) and/or storage (CCS) using a cartridge comprising a carbon dioxide sorbent, comprising:
a) a capturing step, wherein the carbon dioxide sorbent captures carbon dioxide from a gas mixture;
   wherein the gas mixture is a combustion or exhaust gas resulting from combustion of a hydrocarbon based fuel, and wherein the combustion takes place in a vehicle
b) a desorbing step for desorption of the carbon dioxide from the sorbent, thereby recovering the carbon dioxide; and
c) utilization and/or storage of the recovered carbon dioxide/
   wherein the carbon dioxide sorbent is a molecular sieve, wherein the cartridge is placed in the vehicle, in which the combustion takes place, wherein in step b) the cartridge is removed from the vehicle to desorb the carbon dioxide from the sorbent.

The gas mixture is a combustion or exhaust gas resulting from combustion of a hydrocarbon based fuel. In a preferred embodiment, the hydrocarbon based fuel is selected from a group consisting of methane, petrol, diesel, jet fuel, natural gas, gasoline, fuel oil, coal, methanol, dimethylether (DME), ethanol, biofuels or mixtures thereof.

Optionally, the sorbent is an adsorbent and/or absorbent. Optionally, in step a) the carbon dioxide sorbent is an adsorbent and adsorbs carbon dioxide from a gas mixture. Optionally, in step a) the carbon dioxide sorbent is an absorbent and absorbs carbon dioxide from a gas mixture.

The combustion takes place in a vehicle, preferably the vehicle is a car, truck, bus, ship, boat, train or aircraft, or in an industrial facility.

The cartridge is placed in the vehicle in which the combustion takes place. The vehicle uses the hydrocarbon based fuel as fuel and/or the combustion of the hydrocarbon based fuel provides the energy for motion and operation of the vehicle.

In step b) the cartridge is removed from the vehicle to desorb the carbon dioxide from the sorbent or for the desorption step. Optionally, the sorbent is removed from the cartridge for desorption of the carbon dioxide.

Optionally, step b) further comprises prior to desorption a step of collecting the cartridges and/or the vehicles.

In a preferred embodiment, the methane is produced biologically, optionally by methanogenesis using methanogenic microorganisms, or chemically, optionally by the Sabatier process, or originates from natural gas. In another preferred embodiment, the carbon dioxide recovered from the sorbent is used to produce methane by methanation (i.e. chemical methane production employing the Sabatier process) and/or methanogenesis or any other fuel described herein.

Optionally, step c) comprises the use of carbon dioxide for a biological or chemical process, optionally for methanogenesis by methanogenic microorganisms and/or for the Sabatier process. Both processes produce methane.

The present invention also provides the use of a cartridge comprising a carbon dioxide sorbent for the method of the invention according to the claims.

Further, a system of carbon capture and utilization (CCU) and/or storage (CCS) is provided comprising
a) at least one cartridge comprising a carbon dioxide sorbent for capturing carbon dioxide from a gas mixture as defined in the claims,
b) a device for desorbing the carbon dioxide from the sorbent of the cartridge.

Optionally, the gas mixture is the combustion and/or exhaust gas of a vehicle. The cartridge is placed in a vehicle and the carbon dioxide sorbent captures, including adsorption and absorption, the carbon dioxide from the combustion or exhaust gas of the vehicle

Optionally, the system comprises a collecting unit.

The gas mixture is a combustion or exhaust gas, which results from the combustion of a hydrocarbon based fuel.

In a preferred embodiment, the hydrocarbon based fuel is selected from a group consisting of methane, petrol, diesel, jet fuel, natural gas, gasoline, fuel oil, coal, methanol, dimethylether (DME), ethanol, biofuels, or mixtures thereof, optionally the methane originates from methanogenesis by methanogenic microorganisms.

In an optional embodiment, the system further comprises c) a bioreactor, suitable for producing methane using methanogenic microorganisms using the carbon dioxide desorbed from the cartridge. Optionally, the system is characterized in that the system uses energy from renewable energy sources.

Also provided is a cartridge comprising a carbon dioxide sorbent for use in a vehicle suitable for using a hydrocarbon based fuel as fuel or emitting a carbon dioxide containing gas mixture and/or industrial facility suitable for using a hydrocarbon based fuel as energy source or emitting a carbon dioxide containing gas mixture, characterized in that the carbon dioxide sorbent allows the sorption and desorption of carbon dioxide Please insert text of page 6a here.

The present invention further provides a vehicle industrial which emits a carbon dioxide containing gas mixture, and/or is suitable for using a hydrocarbon based fuel as fuel and/or energy source, and comprises a cartridge with carbon dioxide sorbent, wherein the cartridge is removable and as defined in the claims.

Hence, the present invention provides a method for carbon capture and utilization (CCU) or storage (CCS) using a cartridge comprising a carbon dioxide sorbent, comprising:
a) a capturing step, wherein the carbon dioxide sorbent captures carbon dioxide from a gas mixture;
b) a desorbing step for desorption of the carbon dioxide from the sorbent, thereby recovering the carbon dioxide; and
c) utilization and/or storage of the recovered carbon dioxide
as defined in the claims.

In an exemplary embodiment, the method of the invention comprises three steps: step (1) comprises carbon dioxide sorption from a gas mixture which is the combustion or exhaust gas of a vehicle step (2) comprises the desorption of the carbon dioxide and step (3) comprises the use and/or storage of the carbon dioxide which was desorbed in step (2).

The term "sorption" comprises adsorption and absorption. Adsorption is generally understood as the adhesion of atoms, ions, or molecules from a gas, liquid, or dissolved solid to a surface, whereby the adsorbent builds up a layer on the surface of , wherein the carbon dioxide sorbent is a molecular sieve, characterized in that the cartridge is removable from the vehicle for a desorbing step. the adsorbent. It is a surface phenomenon. This process differs from absorption, in which a fluid (the absorbate) permeates or is dissolved by a liquid or solid (the absorbent). Adsorption is a surface-based process while absorption involves the whole volume of the material. In chemistry, absorption is a physical or chemical phenomenon or a process in which atoms, molecules, or ions enter some bulk phase - gas, liquid, or solid material. In absorption molecules are taken up by the volume, not by the surface (as in the case for adsorption). The term sorption encompasses both processes, while desorption is the reverse of it, i.e. is the release of the adsorbed or absorbed substance, here carbon dioxide. Hence, "desorption" covers all processes which release the carbon dioxide either adsorbed or absorbed from the sorbent.

The "capturing step" or the capture of carbon dioxide denotes a method or process step in which carbon dioxide is taken from a mixture, in particular a gas mixture, and bound to or uptaken by the sorbent. Hence, "capturing" of carbon dioxide comprises sorption of carbon dioxide by the sorbent, hence including adsorption and absorption. This kind of binding or uptake can be any kind of separatitig/isolatirig carbon dioxide from the other components of the gas mixture and must not be covalently.

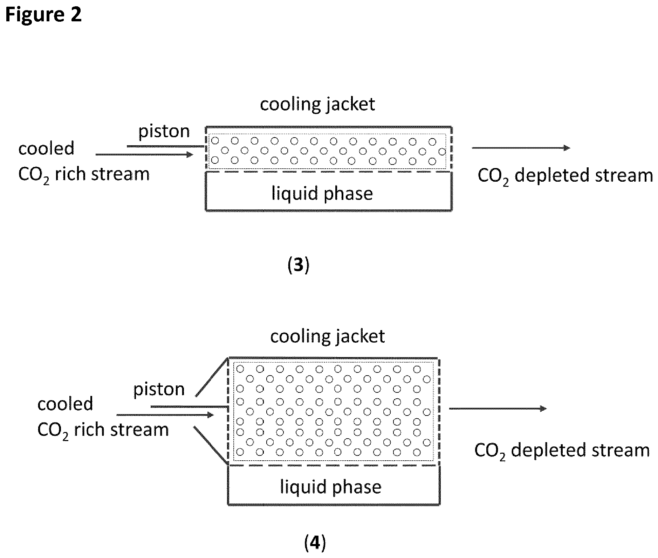

The term "carbon dioxide sorbent" or "sorbent" encompasses adsorbents and/or absorbents for carbon dioxide to capture carbon dioxide from a gas mixture. Examples of carbon dioxide sorbents or capturing methods include zeolite (e.g. zeolite SSZ-13), molecular sieves, inorganic and organic base pellets and synthetic organic resins, such as functionalized melamines with amino groups, hydroxide based resins with alkali and earth alkali hydroxides, activated carbon and sodasorb^{®} absorbent. Also mixtures thereof may be employed. The sorbent is generally filled into the cartridge so that the gas mixture comprising carbon dioxide may pass the sorbent and be captured, i.e. be adsorbed and/or absorbed. In one reference example, NaOH pellets are arranged on a grid, wherein exhausted NaOH passes the grid as a liquid and is thus removed from the part which the gas mixture passes (cf. Figure 2).

Sorbent material may be obtained from BASF (Ludwigshafen, Germany), Grace (Columbia, MD, USA) and UOP (Des Plaines, IL, USA). The carbon dioxide sorbent according to the invention is a molecular sieve.

Zeolites are microporous, aluminosilicate minerals well known as commercial adsorbents and catalysts. Sodasorb^{®} absorbent is a mixture of calcium hydroxide, sodium hydroxide, potassium hydroxide and water. It absorbs carbon dioxide in a chemical process, not in a physical one. The absorption by activated carbon involves the physical entrapment of gas.

The cartridge design takes the following aspects into consideration: A) the surface area of the sorbent needs to be adequate to the percentage of carbon dioxide in the gas mixture and the time period the sorbent should capture the carbon dioxide without desorption taking place. B) The gas flow rate needs to be slow enough for the carbon dioxide to be absorbed or adsorbed (dwell time). C) Optimal packing of the sorbent material to avoid that a path is formed which allows the gas to pass the sorbent without being captured (known as channeling). For this purpose, a net/grid/diffuser is placed inside the cartridge and along its longitudinal direction. D) Excessive moisture should not reach sorbent. For this purpose, a dehumidifier is placed before the cartridge to remove moisture from the gas mixture prior to the gas mixture entering the cartridge and the sorbent material.

The CO₂ binding capacity of the sorbent largely depends on the nature of the sorbent. Base like resins have higher capacity (sometimes close to 50 weight-% (wt-%) in case of alkali and earth alkali hydroxides). Other sorbents based on adsorptive CO₂ binding mechanisms have high selectivity but poor capacity with however excellent particle morphology which is kept during the binding and recovery process.

A "cartridge" may be any container which can contain a sorbent for carbon dioxide and which can be placed in a stream of gas to capture carbon dioxide. The stream of gas is a gas mixture comprising carbon dioxide wherein the gas mixture is a combustion or exhaust gas resulting from combustion of a hydrocarbon based fuel, and wherein the combustion takes place in a vehicle. Further components in the gas mixture may be nitrogen, water vapor, CO, and NOx and mixtures thereof. Of course, principally any gas may be comprised depending on the industrial process from which the gas mixture originates. The cartridge comprises a carbon dioxide sorbent and in a preferred embodiment, the sorbent releases the captured carbon dioxide in a desorbing step. The sorbent and the cartridge are suitable for releasing the captured carbon dioxide in a desorption step and may be of further use. Optionally, the cartridge and/or the sorbent material are for a single use only. Preferably, the cartridge and/or the sorbent are for multiple use or for multiple capturing and desorption steps, i.e. the cartridge and/or the sorbent are not destroyed by removal of the cartridge from the device which feeds the gas stream, i.e. the gas mixture, to the cartridge and/or by desorption of the carbon dioxide.

The cartridge may be in the form of an axial flow scrubber, wherein the gas mixture linearly passes through the sorbent in the cartridge, in the form of a radial flow scrubber, wherein the gas mixture first passes the sorbent in vertical direction and then leaves the sorbent material from the middle to the outer part in horizontal direction or the other way round.

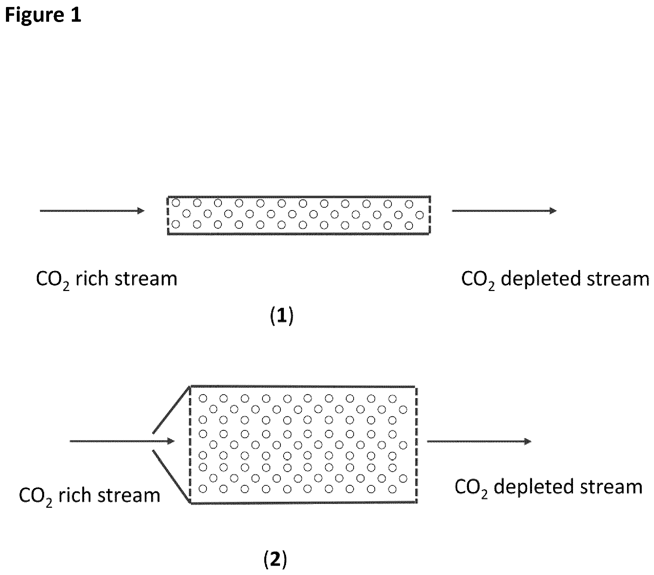

The cartridge may have any form suitable for performing the method of the invention. Examples of such forms are cylindrical, conical, cube-shaped, cuboid, and others and mixtures thereof. Further, the cartridge is suitable for containing the sorbent and has at least one opening for entry of the gas mixture and at least one opening for exit of the gas mixture (cf. Figures 1 and 2). Moreover, the cartridge is suitable for desorbing the carbon dioxide from the sorbent. The cartridge is a component of a vehicle. For the desorption step or any other purpose, e.g. maintenance, data collection or else, the cartridge is removed from the vehicle and after desorbing the carbon dioxide or else, optionally after a step of regeneration of the sorbent for another step of carbon dioxide sorption, be installed again in the vehicle or industrial facility.

It is also possible to install more than one cartridge in parallel or in series in one vehicle. Thereby, the step of desorption can be performed after a longer period of time and the percentage of captured carbon dioxide may be further increased. Preferably, the carbon dioxide amount captured is close to 100%. If 100% may not be reached, the percentage of carbon dioxide capture is at least 30%, 40%, 50%, 60%, 70%, 80%, 85% 90%, 95%, 98% or more.

The experimental setup for measuring CO₂ binding efficiency of various resins involves a cartridge filled with various resins equipped with CO₂ measuring devices at the cartridge's inlet and outlet.

In one exemplary embodiment, CO₂ sorption (1) is followed by CO₂ cartridge collection (2) accomplished by gathering CO₂ cartridges in one collector (e.g. container similar to battery collecting units) for which the cartridges are removed from the vehicle and (3) desorption which is either accomplished by applying heat or lowering the pressure in case of adsorbents while chemical agents like weak acids as gases or liquids are used to recover CO₂ through a classic acid/base reaction in case of absorbers. Step 1 occurs in vehicles step 2 occurs in a collecting unit, such as a gas station, repair shop or maintenance point, step 3 is carried out in an industrial process in a central desorption unit. In an optional embodiment, the cartridge is designed so that the average user of a vehicle, such as the driver of a car, truck or bus, is able to remove the cartridge from the vehicle and is able to re-install a new cartridge or a desorbed and optionally regenerated cartridge in the vehicle. Hence, if the sorbent is saturated with carbon dioxide or is at least partially saturated with carbon dioxide, the cartridge is replaced by a new cartridge (i.e. comprising a sorbent which may capture carbon dioxide) with new (i.e. unsaturated sorbent) sorbent. "Regeneration" of the sorbent and thus of the cartridge may be necessary depending on the desorption process if the sorbent material may not be directly re-used for sorption of carbon dioxide. This regeneration may be performed by a chemical or physical process. After removal of the cartridge with the sorbent the sorbent material comprising carbon dioxide is subjected to a desorption step outside the vehicle, optionally in a centralized desorption unit or desorption site.

The "desorbing step" for desorption of the carbon dioxide from the sorbent leads to release of the carbon dioxide from the sorbent. Thereby, the carbon dioxide is released from the sorbent and is ready for any kind of utilization or storage. Desorption describes a process a substance is released from or through a surface. It is the opposite of sorption, comprising adsorption and/or absorption. The method employed for desorption of carbon dioxide depends on the sorbent. Examples of methods of desorption include desorption by decreased pressure, optionally under vacuum, and/or heat such as in case of adsorbents while chemical agents like weak acids as gases or liquids are used to recover CO₂ through a classic acid/base reaction in case of absorbers.

The recovering of the carbon dioxide comprises the capturing step, wherein carbon dioxide is selectively removed from a gas mixture, and the desorbing step, wherein the captured carbon dioxide is released from the sorbent and ready for further use and/or storage. The skilled person understands well that the recovered carbon dioxide may be used completely or partially for utilization or storage depending on the present need of carbon dioxide as educt gas for industrial, chemical and/or biological purposes.

"Partially" is to be understood as 1%, 1.2%, 2%, 3%, 4%, 5%, 7%, 10%, 20%, 30%, 40%, 50%, 60%, 70%, 80%, 90% or 95% volume of the whole volumetric amount. In an optional embodiment, the carbon dioxide content in the gas mixture is 1 - 20 Vol.-%, preferably 1 - 15 Vol.-%, even more preferably 1 - 12 Vol.-%.

"Storage" or "storing" of carbon dioxide may be performed in any way known to the skilled person. Carbon dioxide may be stored as gas or in a chemically converted form or bound to the sorbent. In particular, storage comprises the storage of carbon dioxide in the sense of Carbon Capture and Storage (CCS). Here, CO₂ is often isolated and enriched from flue gas, then compressed, often liquified and then pumped to the storage site underground.

The gas mixture is an exhaust or combustion gases resulting from combustion of a hydrocarbon based fuel, wherein the combustion takes place in a vehicle.

"Combustion", "oxygen enriched combustion" or "oxygen combustion", is a process wherein carbonaceous material, e.g. petroleum, diesel, gasoline, coal, methanol, dimethylether (DME), ethanol, biofuels, living and/or dead biomass reacts with an oxidizing element, such as oxygen, into carbon dioxide or also partially carbon monoxide, by thermal conversion. The oxygen which is required for combustion may be derived from the electrolysis of water. "Gasification" is a process which converts carbonaceous materials, e.g. petroleum, coal, living and/or dead biomass, biofuel or else into carbon dioxide, hydrogen and carbon monoxide, by thermal conversion and a controlled amount of oxygen and/or steam into a resulting gas mixture called synthesis gas or syngas.

The gas mixture is a combustion gas or exhaust gas. The gas mixture is a combustion gas from a vehicle. The other components as well as the ratio of carbon dioxide to the other components in the gas mixture may vary and depend on the kind of combustion, the engine and the fuel used. Typical components of the gas mixture except carbon dioxide are carbon monoxide (CO), oxygen, sulfur dioxide, nitric oxides (NO, NO₂, N₂O₄, and/or NOₓ), ammonia, aromatic compounds and volatile organic compounds.

The gas mixture is a combustion gas resulting from combustion of a hydrocarbon based fuel, optionally the hydrocarbon based fuel is selected from a group consisting of methane, petrol, diesel, jet fuel, natural gas, gasoline, fuel oil, coal, methanol, dimethylether (DME), ethanol, biofuels, or mixtures thereof.

Further, optionally, the vehicle, wherein the combustion takes place, and wherein the cartridge of the invention is installed, is a car, truck, bus, ship, boat, train or aircraft. The vehicle may also be any other possible vehicle.

The cartridge is placed in the vehicle in which the combustion takes place and in step b) the cartridge is removed from the vehicle for desorbing the carbon dioxide from the sorbent. If the cartridge is removed for the desorbing step, it may be reinstalled after desorption and after an optional regeneration step of the sorbent in or on the cartridge.

If the cartridge is installed in a vehicle, such as an automotive, the desorption step may be performed in parallel to fueling the vehicle or standard maintenance works at the vehicle. During fueling or maintenance, either the desorption step may be performed immediately or the cartridge may be removed for central collection. In the latter case, the cartridges from many vehicles may be united and the desorption of carbon dioxide be performed at a central desorption site. Independent from desorption taking place during maintenance or subsequent to removal/exchange of the cartridge in a centralized fashion, the recovered, i.e. desorbed, carbon dioxide is ready for utilization or storage according to the method of the invention.

The vehicle uses the hydrocarbon based fuel as fuel or energy source. In an alternative embodiment, the combustion of the hydrocarbon based fuel provides the energy for motion and operation of the vehicle. Preferably, the hydrocarbon fuel is methane, diesel or gasoline. Herein, the terms gasoline and petrol are exchangeable.

In a preferred embodiment, methane is produced biologically, optionally by methanogenesis using methanogenic microorganisms, or chemically, optionally by the Sabatier process, or originates from natural gas.

A "methanogenic microorganism" is any microorganism which is capable of producing methane from other substances, i.e. capable of methanogenesis, preferably from a gas mixture comprising carbon dioxide and hydrogen in various ratios, thus the methanogenic microorganisms are capable of producing methane from hydrogen and carbon dioxide. The methanogenic microorganism may be grown in a reaction vessel, which is for example comprised in a bioreactor, under controlled fermentation or cell culture conditions in a controlled environment. In principle, any such methanogenic microorganism can be used for the method of the invention.

Methanogenic microorganisms are obtainable from public collections of organisms, such as the American Type Culture Collection, the Deutsche Stammsammlung für Mikroorganismen und Zellkulturen (DSMZ, Braunschweig, Germany), CBS (Utrecht, Netherlands) and the Oregon Collection of Methanogens, or they can be isolated from a variety of environmental sources. Such environmental sources include anaerobic soils and sands, bogs, swamps, marshes, estuaries, dense algal mats, both terrestrial and marine mud and sediments, deep ocean and deep well sites, sewage and organic waste sites and treatment facilities, animal intestinal tracts, volcano areas and faeces. Suitable cell cultures may be pure i.e. contain only cells of a single species, or may be mixed cultures i.e. contain cells of more than one species. Preferably, a pure cell culture of methanogenic microorganisms is used for the method of the invention.

A methanogenic microorganism by nature being capable of producing methane is especially suitable for the method of the invention. Preferably, the methanogenic microorganism of the invention is a methanogenic archaea, comprising all methanogenic members of the Archaeal domain, such as for example *Methanobacterium alcaliphilum, Methanobacterium bryantii, Methanobacterium congolense, Methanobacterium defluvii, Methanobacterium espanolae, Methanobacterium formicicum, Methanobacterium ivanovii, Methanobacterium palustre, Methanobacterium thermaggregans, Methanobacterium uliginosum, Methanobrevibacter acididiti-ans, Methanobrevibacter ai-bor iphilicus, Methanobrevibacter gottschalkii, Methanobrevibacter olleyae, Methanobrevibacter ruminantium, Methanobrevibacter smithii, Methanobrevibacter woesei, Methanobrevibacter wolinii, Methanothermobacter marburgensis, Methanothermobacter thermoautotrophicus, Methanobacterium thermoautotrophicus, Methanothermobacter thermoflexus, Methanothermobacter thermophilics, Methanothermobacter wolfeii, Methanothermus sociabilis, Methanocorpusculum bavaricum, Methanocorpusculum parvum, Methanoculleus chikuoensis, Methanoculleus submarinus, Methanogenium frigidum, Methanogenium liminatans, Methanogenium marinum, Methanosarcina acetivorans, Methanosarcina barken, Methanosarcina mazei, Methanosarcina thermophila, Methanomicrobium mobile, Methanocaldococcus jannaschii, Methanococcus aeolicus, Methanococcus maripaludis, Methanococcus vannielii, Methanococcus voltaei, Methanothermococcus thennolithotrophicus* and *Methanopyrus kandleri.* Preferred are methanogenic archaea which belong to the species *Methanosarcinia barkeri, Methanothermobacter marburgensis,* such as for example DSM 2133 from Deutsche Stammsammlung für Mikroorganismen und Zellkulturen (DSMZ, Braunschweig, Germany), *Methanobacterium thermoautotrophicus, Methanocaldococcus jannaschii, Methanothermobacter thermoautotrophicus, Methanococcus maripaludis,* or mixtures thereof, more preferably, the methanogenic archaea and thus the preferred methanogenic microorganism is of the species *Methanothermobacter marburgensis,* most preferably, the methanogenic microorganism or methanogenic archaea is *Methanothermobacter marburgensis* strain DSM 2133. "Archaea" are single-celled microorganisms. Archaea have no cell nucleus or any other membrane-bound organelles within their cells. In the past they were viewed as an unusual group of bacteria and named archaeabacteria, however, to date archaea are considered as having an independent evolutionary history since they show many differences in their biochemistry in comparison to other forms of life. Thus, they are now classified as a separate domain (Archaeal domain) in the three-domain system. In this system the phylogenetically distinct branches of evolutionary descent are the archaca, bacteria and eukarya.

Methane is produced from CO₂ either chemically by the so-called Sabatier reaction or Sabatier process or biologically by methanogenic microorganisms which are capable of methanogenesis. Methanogenesis is a biological pathway that converts CO₂ and hydrogen (H₂) into methane (CH₄) according to the overall reaction CO₂+4H₂→CH₄+2H₂O. Using methanogenic microorganisms instead of the chemical Sabatier process, the reaction takes place at relatively moderate temperatures. The reaction system comprising the methanogenic microorganisms is robust with a good impurity tolerance and has a high selectivity.

In another embodiment, the production of methane by methanogenic microorganisms with a renewable or non-renewable energy source, at least one intermediate step is necessary: The use of the electric energy which is obtained from the energy source for the electrolysis of water or brine to obtain hydrogen in the first place and optionally also oxygen. Together with carbon dioxide, at least this hydrogen is used for the production of methane by methanogenic microorganism, subsequently. The oxygen which is provided by the electrolysis of water or brine may optionally be used in oxygen enriched combustion for producing carbon dioxide.

"Utilization" or "use" of the carbon dioxide which is captured, i.e. sorbed by the sorbent, and desorbed from the sorbent may comprise any process which uses carbon dioxide for any purpose. In particular, the use of carbon dioxide comprises the use of carbon dioxide for production of chemical products such as synthetic fuels including methane, gasoline, petrol, diesel fuel and jet fuel, and base chemicals, preferably for the production of methane either chemically, e.g. by the so-called Sabatier process, or biologically, e.g. by conversion of hydrogen and carbon dioxide by methanogenic microorganisms in a process called methanogenesis. Further examples of carbon dioxide use are all carbon dioxide using technologies like methanol synthesis, urea production, Fischer/Tropsch synthesis of synthetic liquid fuels and methanation (chemical methane synthesis).

In particular, step c) comprises the use of carbon dioxide for various biological or chemical processes, optionally for methanogenesis by methanogenic microorganisms, whereby methane is produced or for the Sabatier process, whereby methane is produced.

The present invention also comprises the use of the cartridge of the invention comprising the sorbent for carbon dioxide for the method of the invention.

The invention further provides a system of carbon capture utilization (CCU) and/or storage (CCS) comprising
a) at least one cartridge comprising a carbon dioxide sorbent for capturing carbon dioxide from a gas mixture,
b) a device for desorbing the carbon dioxide from the sorbent of the cartridge as defined in the claims.

Optionally, the system comprises a collecting unit. A "collecting unit" or "collection unit" is used for collecting the cartridges or vehicles prior to the desorption step. The unit can be any facility or building which is suitable to collect and store the cartridges or vehicles before the desorption step is performed in a centralized fashion which keeps the costs low due to large-scale desorption and optimal concentration of man-power and knowledge. The desorption step may take place where the cartridges or vehicles are collected and/or stored as well as the regeneration of the sorbent material and/or the refill of the cartridges with new/fresh, i.e. carbon dioxide unsaturated, sorbent material before the cartridges are again used in a vehicle.

Optionally, the system comprises a device for regenerating the sorbent after desorbing the carbon dioxide.

The system may be further equipped with a chemical indicator which indicates that the sorbent is saturated or close to saturation with CO₂. In this case, the desorption step should follow in due time in order to prevent loss of carbon dioxide to the atmosphere. The system can also optionally be equipped with a temperature sensor since the absorbent may heat up upon carbon dioxide capture and is cooled down after exhaust of the sorbent material, e.g. by a cooling jacket (cf. Figure 2).

In an optional embodiment, the cartridge is placed in a vehicle and captures (e.g. adsorbs or absorbs) the carbon dioxide from the combustion or exhaust gas of the vehicle, i.e. the gas mixture of the invention is the combustion gas or a waste gas or an exhaust gas. In this case, the combustion gas may result from the combustion of a hydrocarbon based fuel, which is optionally selected from a group consisting of methane, petrol, diesel, jet fuel, natural gas, gasoline, fuel oil, coal, methanol, dimethylether (DME), ethanol, biofuels, or mixtures thereof, optionally the methane originates from methanogenesis by methanogenic microorganisms, from the Sabatier process or from natural gas.

Optionally, the system further comprises c) a bioreactor, suitable for producing methane using methanogenic microorganisms using the carbon dioxide desorbed from the cartridge.

Such a bioreactor (= fermenter or reactor) comprises all components and devices which are necessary to produce methane of hydrogen and carbon dioxide using methanogenic microorganisms. For this purpose, the bioreactor comprises at least a reaction vessel suitable for fermenting, growing and culturing the methanogenic microorganisms of the invention, devices for the supply of liquid, solid and gaseous substances and for analytics. "Suitable for fermenting, growing and culturing the methanogenic microorganisms" in the sense of the invention denotes that the reaction vessel allows to maintain a surrounding or condition which promotes cell growth, fermentation and culturing of the cells. This comprises, for example, maintaining the culture at a pre-determined temperature, stirring the cells and providing substances which are essential for the metabolism of the cells, such as gases, medium or medium components. In principle, the reaction vessel may be any container wherein methanogenic microorganism may be cultured, grown and fermented. In general, the reaction vessel is made of glass or steel or a polymer depending on the pressure which is applied to the culture of methanogenic microorganisms. The reaction vessel may be connected to all necessary devices and measuring probes for adjusting the fermentation conditions of the invention to grow the methanogenic microorganisms up to a desired biomass concentration and/or to produce methane.

The bioreactor of the invention may be derived from a standard bioreactor suitable for culturing, fermenting, growing and/or processing of a biomass comprising the methanogenic microorganisms of the invention. Suppliers of standard bioreactors are, for example, Applikon Biotechnology B.V. (Schiedam, The Netherlands), Infors (Bottmingen, Switzerland), Bioengineering (Wald, Switzerland) and Sartorius Stedim Biotech GmbH (Göttingen, Germany).

The bioreactor, i.e. reactor comprises at least one vessel or container suitable for culturing, fermenting and/or processing of the methanogenic microorganisms, i.e. the reaction vessel of the invention. The bioreactor may also comprise two or more reaction vessels. These reaction vessels may be linked, for example via tubes, pipes or else, to transport the cell culture comprising the suspension of methanogenic microorganisms from one reaction vessel to the other or back if needed. The bioreactor may be equipped with various means and devices for adjusting and monitoring the fermentation conditions in the bioreactor and in the reaction vessel or in the reaction vessels. With reference to the bioreactor of the invention, "suitable for the method" denotes that the bioreactor comprises the components and devices which are necessary to culture the microorganisms of the invention in a way that they are able to grow and produce methane and what else is necessary to perform the method of the invention.

In particular, the bioreactor is suitable for producing methane and comprises:
a) at least one reaction vessel for fermenting, growing and/or culturing methanogenic microorganisms,
b) at least one device for introducing and removing gaseous substances into the at least one reaction vessel,
c) at least one device for introducing or removing a liquid substance or a cell suspension into or from the bioreactor or reaction vessel,
d) optionally devices for measuring and/or adjusting the oxidation reduction potential, temperature, pressure, head pressure, off-gas concentration and content, the partial pressure ratio of hydrogen and carbon dioxide and/or pH value,
e) at least one device for removing gas from the at least one reaction vessel,
f) at least one stirring device inside the at least one reaction vessel, and/or
g) at least one device for gas liquid mass transfer, such as an agitator.

Optionally, the bioreactor comprises a device for a continuous feed of medium and/or reducing agent and/or sulphur source.

Optionally, the bioreactor comprises at least one device for the gas feed of carbon dioxide and a separate device for the gas feed of hydrogen. In one exemplary embodiment, an ideal stirred tank bioreactor is used for the method of the invention. This bioreactor comprises a reaction vessel with head plate and multiple inlet and outlet ports. The probes for temperature, pH and oxidation reduction potential measurement are fitted to the ports. The bioreactor is further equipped with an agitator with impeller blades (e.g. Rushton) on at least three levels. Medium and liquid reducing agent is fed via a pump, controlled gravimetrically or with a flow meter or is needed to control the oxidation reduction potential. Acid or base is added by titration to control pH as desired.

The bioreactor and also the reaction vessel comprised in the bioreactor may be connected to various sources of hydrogen and carbon dioxide, nitrogen, real gases and others through the at least one device for introducing of gaseous substances and further to automated systems for feeding liquid, gaseous and solid substances and materials into the bioreactor via peristaltic pumps and others. The composition of the gas obtained from the bioreactor may comprise - next to methane - other gases, in particular the amounts of hydrogen and carbon dioxide, which may be measured for example by an individually applied gas analyser system, such as supplied by BlueSens gas sensor GmbH (Herten, Germany). The gas produced by methanogenesis in the bioreactor may optionally be further processed by standard means, such that hydrogen and carbon dioxide, which were not converted into methane, are separated from methane and or from each other. Hydrogen and carbon dioxide which are comprised in the off-gas are preferably recycled in that they are fed back into the reaction vessel of the invention. Hydrogen may be separated from the gas mixture using a separation device such as a membrane which allows the small hydrogen molecules to pass through the pores of the membrane and does not allow the passage of larger molecules or by classical condensation using a heat exchangeror else. Carbon dioxide may be separated from the gas mixture for example with a cartridge of the invention or another sorbent which selectively captures carbon dioxide or which selectively captures gases other than carbon dioxide from the gas mixture. Both hydrogen and carbon dioxide which have been recovered from the gas mixture may be used as educts in methanogenesis or - in case of carbon dioxide - may be used or stored in step c) of the method of the invention.

The bioreactor may further comprise devices which allow the sterile and anaerobic entry and exit of substances required for the method of the invention. "Substances required for the method of the invention" are for example the biomass comprising the methanogenic microorganisms, the medium or medium components, water, gases, such as hydrogen, carbon dioxide, methane, hydrogen sulfide, nitrogen or mixtures thereof, and compositions which might contain a mixture of all these substances.

The bioreactor is further equipped with discharge lines, pumps and compressors. The bioreactor at least comprises all devices which are necessary to feed the gases which are required for methanogenesis, i.e. at least hydrogen and carbon dioxide, liquid substances, such as the cell culture suspension and fresh medium or medium components, devices for removing gas, excess liquid and gaseous parts from inside the bioreactor, and all other components which are necessary to control the fermentation parameters of the invention.

A reaction vessel of the bioreactor of the invention for culturing methanogenic microorganisms may have different volumes, wherein larger volumes are preferred for the industrial production of methane. The industrial production of methane also comprises the methane production in decentralized household applications, wherein the volume of the reaction vessel comprised in the bioreactor may be in the smaller and middle range, and largely depends on the particular methane amount which is needed and the available space. In any embodiment of the invention, the volume of the reaction vessel is at least 1 L, preferably at least 5 L, 10 L, 25 L, more preferably at least 50 L, 100 L, 500 L, 1000 L, even more preferably the volume of the reaction vessel is at least 2000 L, 5000 L, 10,000 L, 20,000 L, 50,000 L, most preferably the volume of the reaction vessel is at least 100,000 L.

In a preferred embodiment, the system of the invention uses energy from renewable energy sources. For this purpose, the system may further comprise a device for generating energy from a renewable energy source.

"Renewable energy" is energy which comes from natural resources or sources and is renewable, i.e. naturally replenished. Renewably energy comprises wind power, solar power, geothermal power, water/hydro power, wave power, tidal power, biofuels, biomass and combinations thereof. More preferably, the energy source is selected from the group consisting of solar, wind, water, geothermal power or biomass. A "device for generating electric energy from a renewable energy source" is a reactor or device, i.e. respective power plants which converts the energy of the energy source into electric energy. Said power plants may be large-scale power plants or household-scale devices or else.

Solar powered electrical generation relies on concentrated solar heat (e.g. heat engines) and solar power (e.g. photovoltaics in solar panels). A device for generating electric energy from solar power may for example be selected from photovoltaics, concentrated solar power system or else and may be obtained for example from Bosch Solar Energy AG (Erfurt, Germany), sonnen_systeme Projektgesellschaft mbH (Alheim-Heinebach; Germany), First Solar (Tempe, USA), Suntech (Wuxi, China), Sharp (Tokyo, Japan), Q-Cells (Bitterfcld- Wolfen, Germany) and Stirling Energy Systems, Inc. (Scottsdale, AZ, USA). Solar hot water system solar heat engines may be used for heating the bioreactor of the system of the invention.

Biomass is also regarded as renewable energy source and is biological material from living or recently living organisms, such as wood, waste, (hydrogen) gas, and alcohol fuels. Living or recently living organisms comprise plants and trees, such as miscanthus, switchgrass, hemp, corn, poplar, willow, sorghum, sugarcane, eucalyptus, cactus or palms, but also forest residues, e.g. dead trees, branches and tree stumps, yard clippings, wood chips, garbage, plant or animal matter used for production of fibres or chemicals, and biodegradable waste that can be burnt as fuel. Excluded are such organic materials as fossil fuels which have been transformed by geological processes into substances such as coal or petroleum. Biofuels, e.g. bioethanol, biobutanol (biogasolinc), biogas, syngas, bioethers, biodiesel or solid biofuels as wood pellets, cube or pucks, are a wide range of fuels which are in some way derived from biomass. The energy for the production of biomass or biofuel is thus derived from the sun and converted by photosynthesis into the biological material. Devices for generating electric energy from biomass or biofuel comprise biomass power plants, and can be obtained for example from SBBiogas GmbH (Marktbreit, Germany), Evonik New Energies GmbH (Saarbruccken, Germany) or Envi Con & Plant Engineering GmbH (Nuremberg, Germany).

A device for generating electric energy from wind power may for example be selected from wind turbine, wind mill, wind pump or drainage. Suppliers of said devices are for example for small applications: Superwind (Bruehl, Germany), Braun Windturbinen (Nauroth, Germany), Urban Green Energy (New York, USA) and Helix Wind (Poway, USA). Exemplary suppliers of wind turbines for larger applications are Vestas (Randers, Denmark), GE Wind Energy (Fairfield, USA), Sinovel (Beijing, China), Enercon (Aurich, Germany), Goldwind (Urumqui, China), Gamesa (Zamudio, Spain) and Siemens Wind Power (Brande, Denmark).

Geothermal electricity is electricity generated from geothermal energy. A device for generating electric energy from geothermal power may for example be selected from dry steam power plant, flash steam power plant, hybrid plant and binary cycle power plant and may be obtained for example from Ansaldo Energia (Genoa, Italy) or ECONAR (Maple Grove, MN, USA).

In general, the production of hydro electricity uses the gravitational force of falling or flowing water. Conventional hydroelectric power stations use the potential energy of dammed water for driving a water turbine and generator. The energy amount obtained in this way depends on the water volume and the difference in height between the source and the water's outflow. Pumped-storage hydroelectric power stations produce electric energy to supply high peak demands by moving water between reservoirs of different levels. Here, water is released back into the lower reservoir through a turbine which is connected to a generator or preferably may be connected to the bioreactor or device for producing hydrogen and/or oxygen by the electrolysis of water and/or brine. Also, run-of-the-river hydroelectric stations, small, micro or pico hydro stations are available. A device for generating electric energy from water/hydro power may for example be obtained from AC-Tec G.m.b.H (Kaltern, Italy) or EnBW Energie Baden-Württemberg AG (Karlsruhe, Germany).

Wave power denotes the energy of ocean surface waves. A device for generating electric energy from wave power may for example be selected from point absorber or buoy, surfacing following or attenuator oriented parallel to the direction of wave propagation, terminator, submerged pressure differential, oriented perpendicular to the direction of wave propagation, oscillating water column, or an overtopping facility. The devices comprise a hydraulic ram, elastomeric hose pump, pump-to-shore, hydroelectric turbine, air turbine or a linear electrical generator, optionally also a parabolic for increasing the wave energy at the point of capture. Such devices may be located close to shoreline, near shore or offshore. Suppliers are for example Ocean Navitas Ltd. (Marton, UK), AWS Ocean Energy Ltd. (Inverness, UK), BioPower Systems (Mascot, Australia), Columbia Power Technologies (Corvallis, OR, USA), Ocean Power Technologies (Pennington, NJ, USA) or Pelamis Wave Power (Edinburgh, UK).

A device for generating electric energy from tidal power which uses the daily rise and fall of water due to tides may for example be selected from tidal power stations, undershot waterwheels, dynamic tidal power plants, tidal barrage, tidal lagoons and turbine technology, such as axial turbines or crossflow turbines. Suppliers are for example BioPower Systems (Mascot, Australia), Neptune Renewable Energy Ltd. (North Ferriby, UK) or Clean Current Power Systems Incorporated (Vancouver, Canada).

The invention further provides a cartridge comprising a carbon dioxide sorbent for use in a vehicle suitable for using a hydrocarbon based fuel as fuel or energy source, the cartridge is characterized in that the carbon dioxide sorbent allows desorption of carbon dioxide and is further defined in the claims.

Moreover, the invention provides a vehicle, which is suitable for using a hydrocarbon based fuel as fuel or energy source or is emitting a carbon dioxide containing gas mixture, comprising a cartridge as defined in the claims with carbon dioxide sorbent, wherein cartridge is removable. Such a vehicle can be an automobile, such as a car, truck or bus, train, aircraft, boat or ship.

### BRIEF DESCRIPTION OF THE DRAWINGS

- Figure 1: depicts two types of Single Zone Cartridges according to the present invention. In Single Zone Cartridges the sorbent is packed in narrow (type 1) or broader sized (type 2) columns. In the cartridge, CO₂ is selectively removed from the gas mixture, such as an exhaust gas. In type (2) cartridges, the residence time of CO₂ is increased because of larger volume and sorption capacity. At the same time the linear flow velocity is reduced due to the larger size of the cartridge. Both measures increase the CO₂ binding efficiency.
Desorption, i.e. CO₂ recovery, occurs either through heating and/or applying negative pressure (in case of adsorbers) or the filling material is simply replaced (in case of absorbers).
- Figure 2: depicts two types of Two Zone Cartridges. Two Zone Cartridges have 2 compartments: an upper zone for selective CO₂ sorption and a lower zone for collecting condensed water or alkaline condensed water. Both types (3) and (4) have a cooled jacket for heat removal during sorption which increases binding efficiency and condenses water vapor. If sorption is supported by an additional cooling unit in front of the cartridge, the CO₂ exhaust temperature is decreased to below 200 °C.
Type (3) is a single column reactor which is split in two components by a mesh. In the upper part, sorbent pellets are preferably placed in a heat and pH resistant bag which is permeable to water. The liquid phase is collected in the lower reservoir type zone which can be de-attached from the upper part. Therefore, this type of cartridge is used for CO₂ recovery if desorption from the sorbent is performed by an acid/base reaction (e.g. after CO₂ removal with hydroxide pellets). The type (4) cartridge is also split in two compartments but has a higher binding capacity due to a larger sized column. Also here, the linear gas velocity is decreased when entering the sorption zone due to the diameter enlargement while the residence and contact time increase compared to the type (3) cartridge. The cartridge components are the same as in type (3): upper zone (pellets, pH & heat resistant bag which is water permeable), lower zone (reservoir for condensed liquids, such as water), mesh between the zones. The reservoir can be de-attached for desorption.
A piston is an optional component which compresses the cartridge bed in case of upper bed collapse. In this way, the cartridge's lifetime is prolonged in all four cartridge types (1) to (4) while maintaining a high CO₂ binding performance.

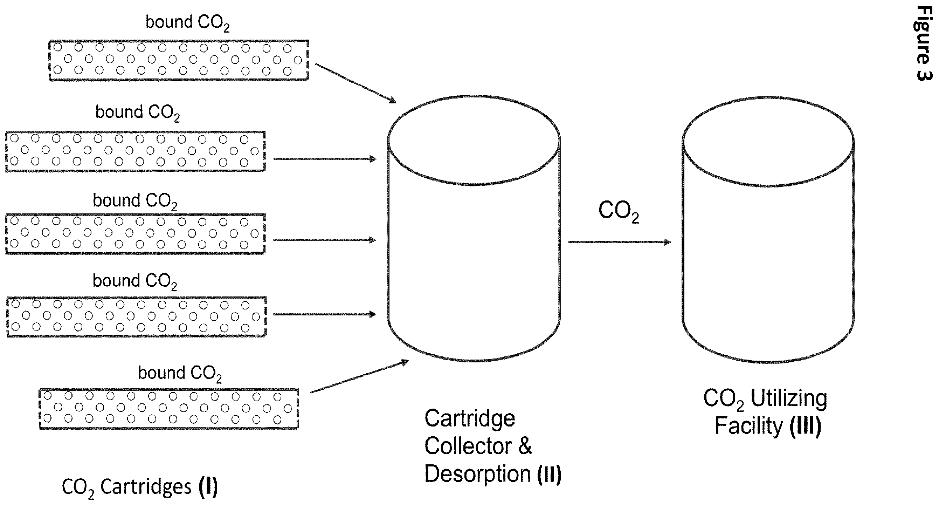

- Figure 3: depicts a preferred embodiment of the system of the invention, namely an exemplary vehicle system solution. (I) Cartridges capture CO₂ from a gas mixture, such as an exhaust gas or combustion gas of a vehicle. (II) The CO₂ cartridges are then removed from the vehicle and collected in a cartridge desorption unit. In the desorption unit, CO₂ is desorbed, e.g. by using physical methods like heat and/or decreased pressure or chemical principles like acid/base reactions to desorb and recover CO₂. (III) A CO₂ utilizing facility converts CO₂ into fuels, such as methane, or base chemicals.

## Claims

1. Method for carbon capture and utilization (CCU) and/or storage (CCS) using a cartridge comprising a carbon dioxide sorbent, the method comprising:
a) a capturing step, wherein the carbon dioxide sorbent captures carbon dioxide from a gas mixture, wherein the gas mixture is a combustion or exhaust gas resulting from combustion of a hydrocarbon based fuel, and wherein the combustion takes place in a vehicle;
b) a desorbing step for desorption of the carbon dioxide from the sorbent, thereby recovering the carbon dioxide; and
c) utilization and/or storage of the recovered carbon dioxide,
wherein the carbon dioxide sorbent is a molecular sieve, wherein the cartridge is placed in the vehicle, in which the combustion takes place,
wherein in step b) the cartridge is removed from the vehicle to desorb the carbon dioxide from the sorbent.

2. Method according to claim 1, wherein the hydrocarbon based fuel is selected from a group consisting of methane, petrol, diesel, jet fuel, natural gas, gasoline, fuel oil, coal, methanol, dimethylether (DME), ethanol, biofuels, and mixtures thereof.

3. Method according to claim 1 or 2, wherein the vehicle is selected from the group consisting of car, truck, bus, ship, train, boat and aircraft; preferably the vehicle uses the hydrocarbon based fuel as fuel and/or wherein the combustion of the hydrocarbon based fuel provides the energy for motion and operation of the vehicle.

4. Method according to any one of the preceding claims, wherein step b) further comprises prior to desorption a step of collecting the cartridges and/or the vehicles.

5. Method according to any one of claims 2 to 4, wherein the methane is produced biologically, optionally by methanogenesis using methanogenic microorganisms, or chemically, optionally by the Sabatier process, or originates from natural gas.

6. Method according to any one of the preceding claims, wherein step c) comprises use of carbon dioxide for a biological or chemical process, optionally for the production of fuel, optionally for methanogenesis by methanogenic microorganisms or for the Sabatier process.

7. Cartridge comprising a carbon dioxide sorbent suitable for use in a vehicle using a hydrocarbon based fuel as fuel or emitting a carbon dioxide containing gas mixture, **characterized in that** the carbon dioxide sorbent allows the sorption and desorption of carbon dioxide, wherein the carbon dioxide sorbent is a molecular sieve, **characterized in that** the cartridge is removable from the vehicle for a desorbing step.

8. Use of the cartridge according to claim 7 for carbon capture and utilization (CCU) and/or storage (CCS).

9. System of carbon capture and utilization (CCU) and/or storage (CCS) comprising
a) at least the cartridge according to claim 7 for capturing carbon dioxide from a gas mixture,
b) a device for desorbing the carbon dioxide from the sorbent of the cartridge, and
c) optionally, a collecting unit,
wherein the cartridge is placed in a vehicle, and wherein the gas mixture is a combustion or exhaust gas of the vehicle.

10. The system according to claim 9, wherein the gas mixture results from the combustion of a hydrocarbon based fuel, preferably the hydrocarbon based fuel is selected from a group consisting of methane, petrol, diesel, jet fuel, natural gas, gasoline, fuel oil, coal, methanol, dimethylether (DME), ethanol, biofuels, or mixtures thereof, optionally the methane originates from methanogenesis by methanogenic microorganisms.

11. The system according to claim 9 or 10, further comprising d) a bioreactor, suitable for producing methane using methanogenic microorganisms using the carbon dioxide desorbed from the cartridge.

12. The system according to any one of claims 9 to 11, **characterized in that** the system uses energy from renewable energy sources.

13. Vehicle suitable for using a hydrocarbon based fuel as fuel or energy source, or emitting a carbon dioxide containing gas mixture, comprising the cartridge according to claim 7, wherein the cartridge is removable.

## Patentansprüche

1. Verfahren zur Kohlenstoffabscheidung und -nutzung (CCU) und/oder -speicherung (CCS) unter Verwendung einer Kartusche, die ein Kohlendioxid-Sorptionsmittel umfasst, wobei das Verfahren umfasst:
a) einen Abscheidungsschritt, wobei das Kohlendioxid-Sorptionsmittel Kohlendioxid aus einem Gasgemisch einfängt, wobei das Gasgemisch ein Verbrennungsgas oder Abgas ist, das aus der Verbrennung eines Kraftstoffs auf Kohlenwasserstoffbasis resultiert, und wobei die Verbrennung in einem Fahrzeug stattfindet,
b) einen Desorptionsschritt zur Desorption des Kohlendioxids von dem Sorptionsmittel,
wodurch das Kohlendioxid zurückgewonnen wird; und
c) Nutzung und/oder Speicherung des zurückgewonnenen Kohlendioxids,
wobei das Kohlendioxid-Sorptionsmittel ein Molekularsieb ist, wobei die Kartusche in das Fahrzeug eingebracht ist, in dem die Verbrennung stattfindet,
wobei in Schritt b) die Kartusche aus dem Fahrzeug entfernt wird, um das Kohlendioxid von dem Sorptionsmittel zu desorbieren.

2. Verfahren gemäß Anspruch 1, wobei der Kraftstoff auf Kohlenwasserstoffbasis aus einer Gruppe ausgewählt ist bestehend aus Methan, Benzin, Diesel, Kerosin, Erdgas, Ottokraftstoff, Heizöl, Kohle, Methanol, Dimethylether (DME), Ethanol, Biokraftstoffen und Mischungen davon.

3. Verfahren gemäß Anspruch 1 oder 2, wobei das Fahrzeug ausgewählt ist aus der Gruppe bestehend aus Auto, Lastwagen, Bus, Schiff, Zug, Boot und Flugzeug; vorzugsweise verwendet das Fahrzeug den Kraftstoff auf Kohlenwasserstoffbasis als Kraftstoff und/oder wobei die Verbrennung des Kraftstoffs auf Kohlenwasserstoffbasis die Energie für die Bewegung und den Betrieb des Fahrzeugs bereitstellt.

4. Verfahren gemäß einem der vorhergehenden Ansprüche, wobei Schritt b) vor der Desorption außerdem einen Schritt des Sammelns der Kartuschen und/oder der Fahrzeuge umfasst.

5. Verfahren gemäß einem der Ansprüche 2 bis 4, wobei das Methan biologisch erzeugt wird, gegebenenfalls durch Methanogenese unter Verwendung von methanogenen Mikroorganismen, oder chemisch, gegebenenfalls nach dem Sabatier-Verfahren, oder aus Erdgas stammt.

6. Verfahren gemäß einem der vorhergehenden Ansprüche, wobei Schritt c) die Verwendung von Kohlendioxid für ein biologisches oder chemisches Verfahren umfasst, gegebenenfalls für die Herstellung von Kraftstoff, gegebenenfalls für die Methanogenese durch methanogene Mikroorganismen oder für das Sabatier-Verfahren.

7. Kartusche umfassend ein Kohlendioxid-Sorptionsmittel, geeignet zur Verwendung in einem Fahrzeug, das einen Kraftstoff auf Kohlenwasserstoffbasis als Kraftstoff verwendet oder ein Kohlendioxid enthaltendes Gasgemisch ausstößt, **dadurch gekennzeichnet, dass** das Kohlendioxid-Sorptionsmittel die Sorption und Desorption von Kohlendioxid erlaubt, wobei das Kohlendioxid-Sorptionsmittel ein Molekularsieb ist, **dadurch gekennzeichnet, dass** die Kartusche für einen Desorptionsschritt aus dem Fahrzeug entfernt werden kann.

8. Verwendung der Kartusche gemäß Anspruch 7 zur Kohlenstoffabscheidung und -nutzung (CCU) und/oder -speicherung (CCS).

9. System zur Kohlenstoffabscheidung und -nutzung (CCU) und/oder -speicherung (CCS) umfassend
a) mindestens die Kartusche gemäß Anspruch 7 zur Abscheidung von Kohlendioxid aus einem Gasgemisch,
b) eine Vorrichtung zum Desorbieren des Kohlendioxids aus dem Sorptionsmittel der Kartusche,
und
c) optional, eine Sammelstelle,
wobei die Kartusche in ein Fahrzeug eingebracht ist, und wobei das Gasgemisch ein Verbrennungsgas oder Abgas des Fahrzeugs ist.

10. Das System gemäß Anspruch 9, wobei das Gasgemisch aus der Verbrennung eines Kraftstoffs auf Kohlenwasserstoffbasis resultiert, vorzugsweise ist der Kraftstoff auf Kohlenwasserstoffbasis ausgewählt aus der Gruppe bestehend aus Methan, Benzin, Diesel, Kerosin, Erdgas, Ottokraftstoff, Heizöl, Kohle, Methanol, Dimethylether (DME), Ethanol, Biokraftstoffen und Mischungen davon, gegebenenfalls stammt das Methan aus der Methanogenese durch methanogene Mikroorganismen.

11. Das System gemäß Anspruch 9 oder 10, ferner umfassend d) einen Bioreaktor, der zur Herstellung von Methan unter Verwendung von methanogenen Mikroorganismen geeignet ist, wobei das vor der Kartusche desorbierte Kohlendioxid verwendet wird.

12. Das System gemäß einem der Ansprüche 9 bis 11, **dadurch gekennzeichnet, dass** das System Energie aus erneuerbaren Energiequellen nutzt.

13. Fahrzeug, das zur Verwendung eines Kraftstoffs auf Kohlenwasserstoffbasis als Kraftstoff oder Energiequelle geeignet ist oder ein kohlendioxidhaltiges Gasgemisch ausstößt, umfassend die Kartusche gemäß Anspruch 7, wobei die Kartusche entfernbar ist.

## Revendications

1. Procédé de capture et d'utilisation (CCU) et/ou de stockage (CCS) du carbone à l'aide d'une cartouche comprenant un sorbant de dioxyde de carbone, le procédé comprenant :
a) une étape de capture, dans lequel le sorbant de dioxyde de carbone capture du dioxyde de carbone à partir d'un mélange gazeux, dans lequel le mélange gazeux est un gaz de combustion ou d'échappement résultant de la combustion d'un carburant à base d'hydrocarbures, et dans lequel la combustion a lieu dans un véhicule ;
b) une étape de désorption pour la désorption du dioxyde de carbone du sorbant, récupérant ainsi le dioxyde de carbone ; et
c) l'utilisation et/ou le stockage du dioxyde de carbone récupéré,
dans lequel le sorbant de dioxyde de carbone est un tamis moléculaire, dans lequel la cartouche est placée dans le véhicule, dans lequel la combustion a lieu, dans lequel à l'étape b) la cartouche est retirée du véhicule pour désorber le dioxyde de carbone du sorbant.

2. Procédé selon la revendication 1, dans lequel le carburant à base d'hydrocarbures est choisi dans un groupe constitué par le méthane, le pétrole, le diesel, le carburéacteur, le gaz naturel, l'essence, le fioul, le charbon, le méthanol, le diméthyléther (DME), l'éthanol, les biocarburants et leurs mélanges.

3. Procédé selon la revendication 1 ou 2, dans lequel le véhicule est choisi dans le groupe constitué par une voiture, un camion, un bus, un navire, un train, un bateau et un aéronef ; de préférence, le véhicule utilise le carburant à base d'hydrocarbures comme carburant et/ou dans lequel la combustion du carburant à base d'hydrocarbures fournit l'énergie nécessaire au mouvement et au fonctionnement du véhicule.

4. Procédé selon l'une quelconque des revendications précédentes, dans lequel l'étape b) comprend en outre avant la désorption une étape de collecte des cartouches et/ou des véhicules.

5. Procédé selon l'une quelconque des revendications 2 à 4, dans lequel le méthane est produit biologiquement, éventuellement par méthanogénèse à l'aide de microorganismes méthanogènes, ou chimiquement, éventuellement par le procédé Sabatier, ou provient du gaz naturel.

6. Procédé selon l'une quelconque des revendications précédentes, dans lequel l'étape c) comprend l'utilisation de dioxyde de carbone pour un processus biologique ou chimique, éventuellement pour la production de carburant, éventuellement pour la méthanogénèse par des microorganismes méthanogènes ou pour le procédé Sabatier.

7. Cartouche comprenant un sorbant de dioxyde de carbone adapté pour une utilisation dans un véhicule utilisant un carburant à base d'hydrocarbures comme carburant ou émettant un mélange gazeux contenant du dioxyde de carbone, **caractérisée en ce que** le sorbant de dioxyde de carbone permet la sorption et la désorption de dioxyde de carbone, dans laquelle le sorbant de dioxyde de carbone est un tamis moléculaire, **caractérisée en ce que** la cartouche peut être retirée du véhicule pour une étape de désorption.

8. Utilisation de la cartouche selon la revendication 7 pour la capture et l'utilisation (CCU) et/ou le stockage (CCS) du carbone.

9. Système de capture et d'utilisation (CCU) et/ou de stockage (CCS) du carbone comprenant
a) au moins la cartouche selon la revendication 7 pour capturer du dioxyde de carbone à partir d'un mélange gazeux,
b) un dispositif pour désorber le dioxyde de carbone du sorbant de la cartouche, et
c) éventuellement, une unité de collecte, dans lequel la cartouche est placée dans un véhicule, et dans lequel le mélange gazeux est un gaz d'échappement ou de combustion du véhicule.

10. Système selon la revendication 9, dans lequel le mélange gazeux résulte de la combustion d'un carburant à base d'hydrocarbures, de préférence le carburant à base d'hydrocarbures est choisi dans un groupe constitué par le méthane, le pétrole, le diesel, le carburéacteur, le gaz naturel, l'essence, le fioul, le charbon, le méthanol, le diméthyléther (DME), l'éthanol, les biocarburants ou leurs mélanges, éventuellement le méthane provient de la méthanogénèse par des microorganismes méthanogènes.

11. Système selon la revendication 9 ou 10, comprenant en outre d) un bioracteur, adapté pour produire du méthane à l'aide de microorganismes méthanogènes à l'aide du dioxyde de carbone désorbé de la cartouche.

12. Système selon l'une quelconque des revendications 9 à 11, **caractérisé en ce que** le système utilise de l'énergie provenant de sources d'énergie renouvelables.

13. Véhicule adapté pour utiliser un carburant à base d'hydrocarbures comme carburant ou source d'énergie, ou émettant un mélange gazeux contenant du dioxyde de carbone, comprenant la cartouche selon la revendication 7, dans lequel la cartouche peut être retirée.
